# EUROPÄISCHE PATENTSCHRIFT

(11) **EP 4 383 002 B1**
(45) Veröffentlichungstag und Bekanntmachung des Hinweises auf die Patenterteilung: **21.05.2025**
(21) Anmeldenummer: 22211813.5
(22) Anmeldetag: 06.12.2022
(51) Int. Cl.: G02F 1/33, G06N 10/40

(54) **VORRICHTUNG UND VERFAHREN ZUR ERZEUGUNG VON OPTISCHEN PINZETTEN**
APPARATUS AND METHOD FOR GENERATING OPTICAL TWEEZERS
APPAREIL ET PROCÉDÉ DE GÉNÉRATION DE PINCES OPTIQUES

(43) Veröffentlichungstag der Anmeldung: 12.06.2024
(73) Patentinhaber: Universität Stuttgart, 70174 Stuttgart (DE); Fraunhofer-Gesellschaft zur Förderung der angewandten Forschung e.V., 80686 München (DE)
(72) Erfinder: Florian, Meinert, 70569 Stuttgart (DE); Ilzhöfer, Philipp, 70569 Stuttgart (DE); Pfau, Tilman, 70569 Stuttgart (DE); Traub, Martin, 52074 Aachen (DE); Adams, Martin, 52074 Aachen (DE); Hoffmann, Hans-Dieter, 52074 Aachen (DE)
(74) Vertreter: RGTH

(56) Entgegenhaltungen:
- EP-A1- 4 016 400
- WO-A1-2022/157246

## Beschreibung

Die vorliegende Erfindung betrifft eine Vorrichtung sowie ein Verfahren zur Erzeugung von optischen Pinzetten.

### Stand der Technik

Vorrichtungen zur Erzeugung von optischen Pinzetten, die bspw. zum Einfangen von Atomen für Quantencomputer dienen, sind aus dem Stand der Technik grundsätzlich bekannt. So beschreibt zum Beispiel US 2020/0185120 A1 ein Verfahren zum Umordnen von Atomen in Arrays, wobei sich die Atome im Rydberg-Quantenzustand befinden. Ferner sind aufgrund der Anordnungen der verwendeten akustooptischen Deflektoren die Schiebebewegungen der Atome hochgradig korreliert, was eine individuelle dynamische Positionskontrolle im Array stark einschränkt. Dies liegt insbesondere daran, dass bei der Hintereinanderschaltung zweier akustooptischer Deflektoren unter einem Winkel die von dem ersten akustooptischen Deflektor erzeugte Reihe mit dem zweiten akustooptischen Deflektor mehrfach kopiert wird, um einen 2D-Array zu erzeugen. Somit lassen sich Schiebeoperationen nicht für einzelne Reihen durchführen.

EP 4 016 400 A1 offenbart eine Quantencomputing-Vorrichtung und ein entsprechendes Verfahren.

WO 2022/157 256 A1 beschreibt eine Anordnung zur Lasermaterialbearbeitung.

Die Aufgabe der vorliegenden Erfindung ist es, eine Vorrichtung zur Erzeugung von optischen Pinzetten, vorzugsweise zum Einfangen von Atomen für einen Quantencomputer, sowie ein entsprechendes Verfahren derart weiterzuentwickeln, dass die Positionen sowie die Amplituden der optischen Pinzetten dynamisch und mit Mikrosekundengenauigkeit einstellbar sein, während ferner ein optischer Pinzettenarray mit möglichst großem Füllfaktor realisiert wird.

### Darstellung der Erfindung: Aufgabe, Lösung, Vorteile

Gelöst wird die vorgenannte Aufgabe durch eine Vorrichtung zur Erzeugung von optischen Pinzetten, die eine Laserstrahlquelle zur Erzeugung eines Laserstrahls umfasst. Ferner umfasst die Vorrichtung mindestens einen akustooptischen Deflektor zum Erzeugen eines Arrays an Teilstrahlen des Laserstrahls und eine Treppenspiegeleinheit umfassend mindestens einen ersten Treppenspiegel zur Reduktion eines Abstandes der Teilstrahlen des Arrays in mindestens einer ersten Richtung. Bei der Laserstrahlquelle handelt es sich insbesondere um einen Hochleistungslaser. Ein Hochleistungslaser weist insbesondere eine CW-Leistung von 10 bis 100 Watt auf. Vor allem dient die Vorrichtung zum Einfangen von Atomen für einen Quantencomputer mittels der optischen Pinzetten, die optische Fallen ausbilden.

Mit Hilfe des mindestens einen akustooptischen Deflektors wird ein Array an Teilstrahlen des Laserstrahls erzeugt, wobei der Array Reihen umfasst. Unter einem Array ist somit vorzugsweise eine Anordnung in zwei Dimensionen zu verstehen. Die Teilstrahlen sind vorzugsweise parallel zueinander ausgerichtet. Vor allem handelt es sich bei dem Array um einen 2D-Array. Benachbarte Reihen können einen vorzugsweise konstanten Reihenabstand aufweisen. Die Teilstrahlen bilden vor allem am Ort einzufangender Atome optische Fallen aus. Hierfür sind die Teilstrahlen vor allem fokussiert.

Die Reihen des Arrays sind vorzugsweise in eine erste Richtung beabstandet, während sich Reihen in eine zweite Richtung erstrecken. Die erste und die zweite Richtung sind vorzugsweise nicht ortsfest, sondern auf den Array bezogen, definiert. Es handelt sich um relative Richtungen. Somit können sich nach einer Reflexion des Arrays die Richtungen absolut betrachtet ändern. Die Teilstrahlen propagieren dabei in einer dritten Richtung, die senkrecht zur ersten und zweiten Richtung steht. Unter dem Abstand der Teilstrahlen in erster Richtung ist somit vorzugsweise der Reihenabstand zu verstehen. Die Teilstrahlen können in der zweiten Richtung Spalten ausbilden. Alternativ können die Teilstrahlen innerhalb unterschiedlicher Reihen ungleich verteilt sein, sodass keine Spalten ausgebildet werden. Im Falle der Ausbildung von Spalten stellt der Abstand der Teilstrahlen in zweiter Richtung den Spaltenabstand dar. Der Abstand benachbarter Teilstrahlen innerhalb einer Reihe bzw. der Spaltenabstand kann sich vom Reihenabstand unterscheiden. Ferner können diese gleich groß sein. Insbesondere umfasst eine Reihe und/oder eine Spalte des Arrays mehr als 10, vorzugsweise mehr als 15, am meisten bevorzugt mehr als 18, Teilstrahlen.

Die Vorrichtung umfasst eine Treppenspiegeleinheit umfassend mindestens einen ersten Treppenspiegel. Die Treppenspiegeleinheit dient zur Reduktion eines Reihenabstandes der Teilstrahlen des Arrays.

Ein Treppenspiegel umfasst eine Vielzahl von Spiegeln, die in zwei Richtungen zueinander versetzt angeordnet sind. Vorzugsweise umfasst ein Treppenspiegel mehr als 5, vorzugsweise mehr als 7, am meisten bevorzugt mehr als 9, Spiegel. Erfindungsgemäß weisen sämtliche Spiegel eines Treppenspiegels eine parallele Ausrichtung auf. Vorteilhafterweise sind sämtliche Spiegel in einem Winkel von 45° zum eintreffenden Licht und somit auch 45° zum ausgekoppelten Licht angeordnet.

Ein Treppenspiegel umfasst einen Treppenabstand zwischen benachbarten Spiegeln und eine Treppenhöhe Die Treppenhöhe kann auch als Spiegelhöhe verstanden werden.

Vor allem sind benachbarte Spiegel sowohl um einen Treppenabstand in erster Richtung und um eine Treppenhöhe in einer dazu senkrechten Richtung zueinander versetzt angeordnet. Benachbarte Spiegel sind vorzugsweise um den Treppenabstand in die erste Richtung versetzt. Der Versatz um eine Treppenhöhe erfolgt insbesondere in Propagationsrichtung der Teilstrahlen. Die in Bezug auf optische Einheiten, wie bspw. Treppenspiegel, angegebene Richtungen beziehen sich auf den einkommenden Array, d.h. auf den Array vor einer Reflexion.

Durch den Versatz der Spiegel entstehen Treppen, die dem Treppenspiegel seinen Namen verleihen. Die Spiegel weisen vor allem eine Mindestbreite senkrecht zur Treppenhöhe und zum Treppenabstand auf, die der Breite des Arrays in zweiter Richtung am Ort des Treppenspiegels entspricht.

Die Spiegel können separat angeordnet sein. In anderen Worten können diese einzeln justierbar sein. Ferner können die Spiegel als Flächen eines gemeinsamen Bauteils ausgebildet sein. Somit ist nur eine Justage des gemeinsamen Bauteils notwendig.

Durch den Einsatz der Treppenspiegeleinheit kann der Reihenabstand des Arrays wesentlich reduziert werden, sodass der Füllfaktor des Arrays besonders groß ist. Unter dem Füllfaktor ist insbesondere das Verhältnis der 1/e²-Durchmesser Anzahl der Teilstrahlen und somit der Pinzetten pro Einheitsfläche zu verstehen. In anderen Worten sind mittels der Pinzetten eingefangene Atome bei einem höheren Füllfaktor dichter gepackt.

Die Treppenspiegeleinheit kann mehrstufig, vor allem zweistufig oder dreistufig, ausgebildet sein. Somit kann die Treppenspiegeleinheit mehrere Treppenspiegel umfassen, die kaskadiert aufgebaut sind. Ausgehende Teilstrahlen eines Treppenspiegels erster Stufe, bspw. eines ersten Treppenspiegels, fallen auf einen Treppenspiegel nächster Stufe, bspw. einen zweiten Treppenspiegel, wobei weiter bevorzugt ausgehende Teilstrahlen des Treppenspiegels zweiter Stufe, bspw. eines zweiten Treppenspiegels, auf einen Treppenspiegel nächster Stufe, bspw. einen dritten Treppenspiegel, fallen. Die Treppenspiegel unterschiedlicher Stufe bilden somit eine Kaskade aus. Jeder Treppenspiegel ist derart angeordnet, dass benachbarte Spiegel in die erste Richtung zueinander um einen Treppenabstand versetzt sind.

Die Treppenhöhe jedes Treppenspiegels ist vorzugsweise kleiner als dessen Treppenabstand. Das Verhältnis von Treppenhöhe zu Treppenabstand kann vor allem zwischen 0,2 und 0,4 betragen. Es kann der Treppenabstand eines Treppenspiegels vorzugsweise der Treppenhöhe des vorangehenden Treppenspiegels, d.h. des Treppenspiegels der vorangehenden Stufe, entsprechen. Insbesondere ist die Treppenhöhe und der Treppenabstand bei jedem Treppenspiegel konstant.

Erfindungsgemäß umfasst die Treppenspiegeleinheit einen zweiten Treppenspiegel mit Spiegeln, einem Treppenabstand zwischen benachbarten Spiegeln und einer Treppenhöhe, wobei der Treppenabstand des zweiten Treppenspiegels der Treppenhöhe des ersten Treppenspiegels entspricht. Somit treffen die Teilstrahlen des Arrays auf den ersten Treppenspiegel und im Anschluss auf den zweiten Treppenspiegel. Dabei wird der Abstand der Teilstrahlen in erster Richtung, d.h. der Reihenabstand, reduziert. Und zwar entspricht der Reihenabstand zwischen benachbarten Teilstrahlen nach Reflexion am ersten Treppenspiegel der Treppenhöhe des ersten Treppenspiegels. Es entspricht der Treppenabstand des zweiten Treppenspiegels der Treppenhöhe des ersten Treppenspiegels, sodass die Teilstrahlen auf die entsprechenden Spiegel des zweiten Treppenspiegels fallen können. Nach Durchlaufen des zweiten Treppenspiegels weisen die benachbarten Teilstrahlen einen Reihenabstand auf, der der Treppenhöhe des zweiten Treppenspiegels entspricht.

Die Vorrichtung kann ferner einen dritten Treppenspiegel umfassen, wobei der dritte Treppenspiegel ebenfalls Spiegel, einen Treppenabstand zwischen benachbarten Spiegeln und eine Treppenhöhe aufweist. Der Treppenabstand des dritten Treppenspiegels entspricht nun vorzugsweise der Treppenhöhe des zweiten Treppenspiegels.

Insgesamt wird der Reihenabstand mithilfe der Treppenspiegeleinheit reduziert, während der Abstand in den Reihen nicht verändert ist. Nach Durchlaufen einer mehrstufigen Treppenspiegeleinheit wird in jeder Stufe der Reihenabstand benachbarter Teilstrahlen vorzugsweise immer weiter reduziert.

Die Treppenhöhe der Spiegel des ersten Treppenspiegels verläuft vorzugsweise in die gleiche absolute Richtung wie die Treppenhöhe des dritten Treppenspiegels. Der Treppenabstand der Spiegel der Treppenspiegel des ersten Treppenspiegels verläuft vor allem in die gleiche absolute Richtung wie der Treppenabstand des dritten Treppenspiegels. Die Treppenhöhe des zweiten Treppenspiegels verläuft insbesondere in die gleiche Richtung wie der Treppenabstand des ersten und des dritten Treppenspiegels, während der Treppenabstand des zweiten Treppenspiegels in die gleiche Richtung wie die Treppenhöhe des ersten und des dritten Treppenspiegels verlaufen kann.

Die Treppenhöhen verschiedener Treppenspiegel der gleichen Stufe verlaufen vorzugsweise in die gleiche absolute Richtung. Der Treppenabstand verschiedener Treppenspiegel der gleichen Stufe verlaufen insbesondere in die gleiche absolute Richtung.

Vorzugsweise kann die Treppenspiegeleinheit mehrere, vorzugsweise zwei, Treppenspiegel pro Stufe aufweisen. In einem solchen Fall bildet jeweils ein Treppenspiegel pro Stufe eine Kaskade an Treppenspiegeln aus. Weist die Treppenspiegeleinheit bspw. zwei erste, zwei zweite und zwei dritte Treppenspiegel auf, bilden diese zwei Kaskaden von Treppenspiegeln. Ein Teil, bspw. die Hälfte, der Teilstrahlen kann eine erste solche Kaskade und der andere Teil, bspw. die Hälfte, der Teilstrahlen kann eine zweite Kaskade durchlaufen. So kann bspw. die Hälfte der ausgebildeten Teilstrahlen je auf einer der beiden Seiten der Treppenspiegeleinheit eingekoppelt werden.

Die Treppenspiegeleinheit kann insbesondere aus einem oder mehreren, bspw. drei, Bauteilen bestehen. Jedes Bauteil kann monolithisch ausgebildet sein. Jedes Bauteil kann keilförmig sein, wobei auf einer Seitenfläche mindestens ein Treppenspiegel angeordnet sein kann. Die Spiegel eines Treppenspiegels sind vorzugsweise als Oberflächen eines Bauteils ausgebildet und müssen somit nicht einzeln justiert werden.

Die Treppenspiegeleinheit kann bspw. ein keilförmiges erstes Bauteil aufweisen, das einen ersten und einen dritten Treppenspiegel umfassen kann. Am meisten bevorzugt umfasst das erste Bauteil auf einer ersten Seitenfläche sowohl einen ersten als auch einen dritten Treppenspiegel. Ferner kann das Bauteil auf einer zweiten Seitenfläche ebenfalls einen ersten und einen dritten Treppenspiegel aufweisen. Der mindestens eine dritte Treppenspiegel kann in dem spitz zulaufenden Endbereich des keilförmigen ersten Bauteils angeordnet sein.

Ferner kann die Treppenspiegeleinheit ein zweites Bauteil umfassen, das vorzugsweise auf einer ersten Seitenfläche einen zweiten Treppenspiegel umfasst. Die erste Seitenfläche des zweiten Bauteils ist vor allem der ersten Seitenfläche des ersten Bauteils zugewandt.

Zudem kann die Treppenspiegeleinheit ein drittes Bauteil aufweisen, das ebenfalls vorzugsweise auf einer ersten Seitenfläche einen zweiten Treppenspiegel umfasst. Die erste Seitenfläche des dritten Bauteils ist vor allem der zweiten Seitenfläche des ersten Bauteils zugewandt. Die Treppenspiegeleinheit ist insbesondere spiegelsymmetrisch, vorzugsweise um eine Mittellinie des ersten Bauteils, ausgebildet.

Ferner ist das zweite Bauteil und/oder das dritte Bauteil derart zum ersten Bauteil ausgerichtet, dass Teilstrahlen nach der Reflexion am ersten Treppenspiegel auf den zweiten Treppenspiegel fallen und nach Reflexion am zweiten Treppenspiegel auf den dritten Treppenspiegel fallen. Die Spiegel des ersten Treppenspiegels, des zweiten Treppenspiegels und des dritten Treppenspiegels sind vorzugsweise parallel zueinander ausgerichtet.

Die Vorrichtung kann ferner eine Einkopplungseinheit zur Einkopplung der Teilstrahlen hinter dem mindestens einen akustooptischen Deflektor in die Treppenspiegeleinheit umfassen. Die Einkopplungseinheit dient zur präzisen Justage der Teilstrahlen in Richtung Treppenspiegeleinheit.

Die Einkopplungseinheit kann als Treppenspiegel mit Spiegeln, einem Treppenabstand zwischen benachbarten Spiegeln und einer Treppenhöhe ausgebildet sein. Dabei sind benachbarte Spiegel erneut in erster Richtung des Arrays angeordnet. Die Treppenhöhe der Einkopplungseinheit entspricht vorzugsweise dem Treppenabstand des ersten Treppenspiegels. Es findet somit bereits bei der Einkopplungseinheit eine erste Reduktion des Abstands zwischen benachbarten Teilstrahlen in erster Richtung statt. Auch bei der Einkopplungseinheit ist die Treppenhöhe vor allem kleiner als der Treppenabstand der Einkopplungseinheit ausgebildet. Die Spiegel der Einkopplungseinheit sind vorzugsweise als separate Spiegel ausgebildet, die einzeln justierbar sind. Dies erlaubt insbesondere eine präzise Justage der einzelnen Teilstrahlen zueinander bzw. zu den folgenden Treppenspiegeln.

Die Einkopplungseinheit kann als vorgelagerte Stufe der Treppenspiegeleinheit ausgebildet sein. Insgesamt kann somit eine vierstufige Kaskade von Treppenspiegeln vorliegen. Dabei kann die Einkopplungseinheit in die Treppenspiegeleinheit integriert sein. Bspw. kann die Einkopplungseinheit auf einem Bauteil der Treppenspiegeleinheit angeordnet sein und somit monolithisch mit mindestens einem Treppenspiegel der Treppenspiegeleinheit ausgebildet sein.

Der Treppenabstand der Einkopplungseinheit kann zwischen 10 mm und 40 mm, vorzugsweise zwischen 20 mm und 30 mm, am meisten bevorzugt zwischen 23 mm und 27 mm, oder 25 mm betragen. Die Treppenhöhe beträgt vorzugsweise zwischen 6 mm und 10 mm, vorzugsweise zwischen 7 mm und 9 mm, oder 8 mm.

Vorzugsweise weist die Vorrichtung mindestens eine Fourierlinse auf. Mithilfe der Fourierlinsen können die diskreten Beugungswinkel des mindestens einen akustooptischen Deflektors in vorzugsweise äquidistante Foki in ersten einer Zwischenbildebene überführt werden. Es kann sich eine bildseitig telezentrische Anordnung ergeben. Die objektseitige Brennebene der Fourierlinsen kann in der Ebene der akustooptischen Deflektoren liegen. Dann liegen die Foki in der bildseitigen Brennebene der Fourierlinsen, und die Propagationsrichtungen der Teilstrahlen sind parallel zueinander. Insbesondere weist die Vorrichtung eine Fourierlinse pro Reihe des Arrays und/oder pro akustooptischen Deflektor auf. Die Fourierlinsen sind zwischen dem mindestens einen akustooptischen Deflektor und der Treppenspiegeleinheit angeordnet.

Zur Justage der Teilstrahlen können Keilplatten, beispielsweise Risley-Prismen, und/oder planparallele Platten vorgesehen sein, die verkippbar sind. Alternativ können lateral verschiebbare, vor allem langbrennweitige Linsen vorgesehen sein, wobei das Brennweitenverhältnis dieser Linsen zu den Fourierlinsen das Übersetzungsverhältnis der resultierenden Verschiebung der Teilstrahlen festlegt. Das Verhältnis der Brennweite der Linsen zu der der Fourierlinsen beträgt vorzugsweise größer als 5, am meisten bevorzugt größer als zehn.

Vorzugsweise entspricht der Treppenabstand des ersten Treppenspiegels zwischen 4 mm und 12 mm, vorzugsweise zwischen 6 mm und 10 mm oder zwischen 7 mm und 9 mm. Ferner bevorzugt kann der Treppenabstand zwischen 7,5 mm und 8,5 mm, am meisten bevorzugt 8 mm betragen. Die Treppenhöhe des ersten Treppenspiegels beträgt insbesondere zwischen 0,5 mm und 3,5 mm, bevorzugterweise zwischen 1 mm und 3 mm, ferner bevorzugt zwischen 1,5 mm und 2,5 mm, am meisten bevorzugt 2 mm.

Der Treppenabstand des zweiten Treppenspiegels beträgt insbesondere zwischen 0,5 mm und 3,5 mm, vorzugsweise zwischen 1 mm und 3 mm, ferner bevorzugt zwischen 1,5 mm und 2,5 mm, am meisten bevorzugt 2 mm. Die Treppenhöhe des zweiten Treppenspiegels beträgt vorzugsweise zwischen 0,25 mm und 0,75 mm, bevorzugterweise zwischen 0,4 mm und 0,6 mm, am meisten bevorzugt zwischen 0,45 mm und 0,55 mm. Ferner kann die Treppenhöhe 0,5 mm betragen.

Der Treppenabstand des dritten Treppenspiegels beträgt vorzugsweise zwischen 0,25 mm und 0,75 mm, ferner bevorzugt zwischen 0,4 mm und 0,6 mm, am meisten bevorzugt zwischen 0,45 mm und 0,55 mm. Ferner kann der Treppenabstand 0,5 mm betragen. Die Treppenhöhe des dritten Treppenspiegels beträgt vorzugsweise zwischen 0,1 mm und 0,3 mm, bevorzugterweise zwischen 0,15 mm und 0,2 mm, am meisten bevorzugt zwischen 0,16 mm und 0,19 mm. Ferner kann die Treppenhöhe 0,1875 mm betragen.

Vorzugsweise umfasst die Vorrichtung eine Strahlteilereinheit zur Aufteilung des Laserstrahls in erster Richtung, vorzugsweise in eine Spalte an Teilstrahlen, in anderen Worten wird der Laserstrahl in mehrere Teilstrahlen in erster Richtung aufgeteilt. Das heißt, die Strahlteilereinheit hat insbesondere einen Eingang und mehrere Ausgänge in erster Richtung. Die Strahlteilereinheit kann mehrere Strahlteiler umfassen. Ferner kann die Strahlteilereinheit als akustooptischer Deflektor ausgebildet sein.

Die Vorrichtung kann pro auszubildende Reihe des Arrays einen eigenen akustooptischen Deflektor umfassen. Insbesondere umfasst die Vorrichtung pro Teilstrahl, der die Strahlteilereinheit verlässt, jeweils einen eigenen akustooptischen Deflektor zum Aufteilen des jeweiligen Teilstrahls in eine zweite Richtung und somit zum Erzeugen mehrerer Reihen und somit des Arrays an Teilstrahlen. Der Abstand der akustooptischen Deflektoren entspricht vorzugsweise dem Abstand der Teilstrahlen nach der Strahlteilereinheit. Jeder akustooptische Deflektor ist insbesondere als einachsiger akustooptischer Deflektor mit einem einzigen Eingang und einer Mehrzahl von Ausgängen ausgebildet. Der Abstand der Ausgänge entspricht dem Abstand der Teilstrahlen in zweiter Richtung nach den Fourierlinsen.

Während somit die Strahlteilereinheit eine Vielzahl von Teilstrahlen in erster Richtung erzeugt, erzeugen die akustooptischen Deflektoren jeweils eine Reihe, sodass insgesamt ein Array entsteht. Insbesondere entspricht der Treppenabstand der Einkopplungseinheit dem Abstand der akustooptischen Deflektoren.

Aufgrund des bautechnisch bedingten Abstands der akustooptischen Deflektoren ist der Reihenabstand wesentlich größer als der Abstand innerhalb einer Reihe. Dies begrenzt maßgeblich den Füllfaktor. Obwohl der Abstand der Teilstrahlen in erster Richtung zunächst dem Abstand der akustooptischen Deflektoren entspricht, wird dieser durch die Treppenspiegeleinheit und vorzugsweise die Einkopplungseinheit in erster Richtung reduziert. Insbesondere entspricht der Reihenabstand der Teilstrahlen des Arrays nach der Treppenspiegeleinheit dem Abstand von Teilstrahlen innerhalb der Reihen. In anderen Worten wird der Reihenabstand der Teilstrahlen mittels der Treppenspiegeleinheit und ggfs. der Einkopplungseinheit an den Abstand benachbarter Teilstrahlen innerhalb einer Reihe angeglichen. Die Treppenspiegeleinheit ggfs. zusammen mit der Einkopplungseinheit ist dazu ausgebildet den Reihenabstand um vorzugsweise etwa zwei Größenordnungen zu reduzieren. Während der Reihenabstand nach den akustooptischen Deflektoren in etwa ein paar Zentimeter beträgt, beträgt er nach Durchlaufen der Treppenspiegeleinheit in etwa 200 Mikrometer.

Ferner bevorzugt kann die Vorrichtung eine Relaisoptik umfassen, die vorzugsweise ein Mikroskopobjektiv aufweist. Das Mikroskopobjektiv kann eine Brennweite zwischen 5 mm und 50 mm, vorzugsweise zwischen 30 mm und 35 mm, vorzugsweise 33 mm, aufweisen. Ferner kann das Mikroskopobjektiv eine numerische Apertur zwischen 0,1 und 1,0, vorzugsweise zwischen 0,4 und 0,6, aufweisen.

Die Relaisoptik dient zur Reduktion des Reihenabstandes und des Abstandes benachbarter Teilstrahlen innerhalb einer Reihe. Mit Hilfe der Relaisoptik werden nach Durchlaufen der Treppenspiegeleinheit somit die Ausmaße des gesamten Arrays reduziert. Es werden somit der Abstand in erster Richtung und der Abstand in zweiter Richtung gleichermaßen reduziert. Der Füllfaktor ändert sich somit hier nicht.

Insbesondere ist die Relaisoptik zweistufig ausgebildet, wobei beide Stufen das gleiche Abbildungsverhältnis aufweisen können. Ferner kann die Relaisoptik mehr als zwei Stufen aufweisen. Die Relaisoptik umfasst vorzugsweise zwei Kollimatoren, die vor dem Mikroskopobjektiv angeordnet sind, und mindestens eine zwischen den Kollimatoren angeordnete Linse, vor allem eine Fokuslinse, in deren Brennebene ein weiteres, vorzugsweise telezentrisches zweites Zwischenbild entstehen kann. Ferner kann zwischen den Kollimatoren eine fokussierende Gruppe von Linsen angeordnet sein. Der erste und/oder der zweite Kollimator kann eine Brennweite vorzugsweise zwischen 200 mm und 300 mm aufweisen.

Der zweistufige Aufbau reduziert die Baugröße der Relaisoptik und somit die der gesamten Vorrichtung. Insbesondere ist die fokussierende Gruppe in der Mitte zwischen den Kollimatoren angeordnet. Ferner kann die Relaisoptik beidseitig telezentrisch ausgebildet sein. Die Relaisoptik kann aus den zwei Kollimatoren, der fokussierenden Gruppe und dem Mikroskopobjektiv bestehen. Unter einer Gruppe sind vorzugsweise mehr als zwei Linsen zu verstehen.

Die Relaisoptik ist vor allem dazu ausgebildet, den Array nach der Treppenspiegeleinheit um einen Faktor von mindestens 20, vorzugsweise mindestens 30, am meistens bevorzugt mindestens 50 verkleinert abzubilden. Nach Durchlaufen der Relaisoptik umfasst der Array einen Reihenabstand und/oder Abstand benachbarter Teilstrahlen innerhalb einer Reihe zwischen 1 µm und 5 µm, vorzugsweise zwischen 2 µm und 4 µm, am meisten bevorzugt in etwa 3 µm.

Nach der Relaisoptik bilden die Teilstrahlen optische Pinzetten. Eine optische Pinzette ist dazu ausgebildet, ein einzelnes Atom an dessen Position zu fixieren. Insbesondere wird die Vorrichtung dazu eingesetzt, Atome für einen Quantencomputer zu fixieren. Bei den Atomen handelt es sich insbesondere um Rydberg-Atome. Dies heißt, dass die Atome angeregt sind. Im Detail ist mindestens ein Elektron der Elektronenhülle in einem hohen Zustand, und zwar in einem sogenannten Rydberg-Zustand. Ein Atom kann jeweils an der Strahltaille, d.h. der schmalsten Stelle, eines Teilstrahls nach der Relaisoptik festgehalten werden.

Ferner kann die Vorrichtung eine Einheit zum Einkoppeln von Strahlung zur Anregung von mittels der optischen Pinzetten eingefangener Atome und/oder zur Auskopplung von Strahlung, die von mittels der optischen Pinzetten eingefangenen Atome stammt. Die Einheit ist zur Einkopplung und/oder Auskopplung in einer Pupillenebene der Relaisoptik ausgebildet. Die Relaisoptik kann zwei Pupillenebenen, nämlich eine erste und eine zweite Pupillenebene, aufweisen. Die Ein- und Auskopplung in einer Pupillenebene ist besonders bevorzugt, da hier Strahltaillen der Teilstrahlen liegen und diese überlagert sind, so dass der Gesamtdurchmesser aller Teilstrahlen minimal ist. Es entsteht somit kein Astigmatismus durch die schräggestellten Spiegel. Die beiden Pupillenebenen liegen vor allem zwischen dem ersten und dem zweiten Kollimator, und zwar liegt vorzugsweise eine Pupillenebene in der Brennebene des zweiten Kollimators der Relaisoptik.

Die Vorrichtung kann dazu ausgebildet sein, die Position einzelner Atome zu verschieben. Vor allem kann das Verschieben der Atome während Gatteropertionen eines tiefen Quantencomputer-Algorithmus erfolgen. Die Bewegung der Atome erlaubt die Konnektivität - in Rydberg-Systemen typischerweise eine Nächste-Nachbar Konnektivität - dynamisch zu verändern. So lässt sich bspw. durch Verschieben eine direkte Verschränkung zwischen ursprünglich oder später im Algorithmus weit voneinander entfernten Atomen erzeugen. Somit wird die Realisierung eines Qubit-Registers mit dynamischer Konnektivität über nächste Nachbarn hinaus ermöglicht.

Der Einsatz akustooptischer Deflektoren ist grundsätzlich besonders vorteilhaft, da sie eine möglichst kleine Ansprechzeit aufweisen und somit dazu ausgebildet sind, die Teilstrahlen und somit die Positionen der optischen Pinzetten in Mikrosekundenschnelle zu verschieben. Eine Verschiebung wird erreicht, indem ein Hochfrequenzsignal, mit dem der jeweilige akustooptische Deflektor angesteuert wird, verändert wird. So verschiebt sich die Position der optischen Pinzette, vorzugsweise proportional zur Frequenzverschiebung. Eine Änderung der Hochfrequenz wird somit direkt in eine Änderung der Position der optischen Pinzetten übersetzt.

Dadurch, dass jeder Reihe ein eigener akustooptischer Deflektor, und zwar genau ein Deflektor, zugeordnet sein kann, können die Positionen eingefangener Atome innerhalb der einzelnen Reihen unabhängig voneinander verändert werden. Der Abstand in jeder Reihe kann insbesondere auf Mikrosekundenskala verändert werden. Es sind Schiebeoperationen eingefangener Atome somit minimal korreliert. Es kann eine möglichst schnelle und hochgradig parallele Positionsverschiebung erfolgen, was besonders vorteilhaft ist, da eine entsprechende Umordnung bei einem Quantencomputer eine hohe Anzahl von optischen Pinzetten betrifft. Die Vorrichtung dient somit als zentraler Baustein für einen Quantencomputer.

Ferner ist die Vorrichtung dazu ausgebildet, die Amplituden der einzelnen Pinzetten einer Reihe unabhängig von denen anderer Reihen zu verändern, da jeder Reihe des Arrays ein eigener akustooptischer Deflektor zugeordnet ist. Dies wird durch eine Einstellung der Amplitude des Hochfrequenzsignals erreicht. Insgesamt können somit Positionen sowie die Amplituden der optischen Pinzetten dynamisch und mit Mikrosekundengenauigkeit eingestellt werden.

Ferner kann sich die Erfindung auf einen Quantencomputer umfassend eine oben beschriebene Vorrichtung beziehen.

In einem weiteren Aspekt betrifft die vorliegende Erfindung ein Verfahren zur Erzeugung von optischen Pinzetten, vorzugsweise zum Einfangen von Atomen für einen Quantencomputer, wobei das Verfahren eine Erzeugung eines Laserstrahls mittels einer Laserstrahlquelle umfasst.

Ferner umfasst das Verfahren ein Erzeugen eines Arrays an Teilstrahlen mittels mindestens eines akustooptischen Deflektors und eine Reduktion eines Reihenabstandes der Teilstrahlen des Arrays mittels einer Treppenspiegeleinheit, umfassend mindestens einen ersten Treppenspiegel, wobei der erste Treppenspiegel Spiegel, einen Abstand zwischen benachbarten Spiegeln und eine Treppenhöhe umfasst. Erfindungsgemäß umfasst die Treppenspiegeleinheit einen zweiten Treppenspiegel, der Spiegel, einen Treppenabstand zwischen benachbarten Spiegeln und eine Treppenhöhe umfasst, wobei der Treppenabstand des zweiten Treppenspiegels der Treppenhöhe des ersten Treppenspiegels entspricht. Sämtliche Spiegel des ersten und des zweiten Treppenspiegels weisen jeweils eine parallele Ausrichtung auf.

Insbesondere umfasst das Verfahren ein Aufteilen des Laserstrahls in Teilstrahlen in die erste Richtung mittels einer Strahlteilereinheit und ein jeweiliges Aufteilen jedes Teilstrahls in eine Reihe und somit das Erzeugen des Arrays an Teilstrahlen mittels eines jeweiligen akustooptischen Deflektors.

Das Verfahren kann ferner das Einkoppeln der Teilstrahlen des Arrays in die Treppenspiegeleinheit umfassen, und zwar vorzugsweise mittels einer Einkopplungseinheit. Ferner kann das Verfahren das Durchlaufen der Treppenspiegeleinheit umfassen, nämlich die Reflexion am ersten Treppenspiegel und vorzugsweise am zweiten Treppenspiegel und ferner bevorzugt am dritten Treppenspiegel. Es wird sowohl bei der Einkopplungseinheit als auch bei jedem Treppenspiegel der Treppenspiegeleinheit der Abstand der Teilstrahlen in erster Richtung reduziert. Ferner kann das Verfahren eine weitere Reduktion des Abstandes der Teilstrahlen sowohl in erster Richtung als auch in zweiter Richtung umfassen, vorzugsweise mittels einer Relaisoptik, die ein Mikroskopobjektiv aufweisen kann.

Insbesondere ist das Verfahren mittels der oben genannten Vorrichtung auszuführen und die Vorrichtung zur Durchführung des Verfahrens ausgebildet.

### Kurze Beschreibung der Figuren

Es zeigen in rein schematischer Darstellung:
- Figur 1:: eine Vorrichtung zur Erzeugung von optischen Pinzetten;
- Figur 2:: ein Array an Teilstrahlen,
- Figur 3:: eine detaillierte Ansicht der Vorrichtung der Figur 1, und
- Figur 4: und: eine vergrößerte Darstellung der Treppenspiegeleinheit der Figur 3;
- Figur 5:: ein Verfahrensschema eines Verfahrens zur Erzeugung optischer Pinzetten.

### Bevorzugte Ausführungsformen

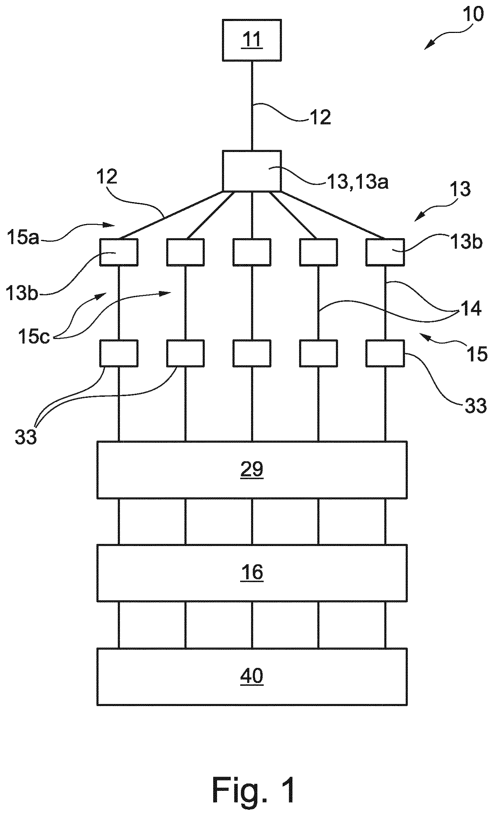

Figur 1 zeigt eine schematische Darstellung einer Vorrichtung 10 zur Erzeugung von optischen Pinzetten. Die Vorrichtung 10 umfasst eine Laserstrahlquelle 11, die einen Laserstrahl 12 auskoppelt. Ferner umfasst die Vorrichtung 10 mehrere akustooptische Deflektoren 13, eine Strahlteilereinheit 13a, die den Laserstrahl 12 in eine Vielzahl von Teilstrahlen 14, und zwar in diesem Beispiel eine Spalte 15a, aufteilt, und eine Vielzahl von akustooptischen Deflektoren 13b zum Aufteilen der Teilstrahlen 14 in Reihen 15c. Die Reihen 15c verlaufen in die Bildebene, sodass die einzelnen Teilstrahlen in Figur 1 nicht zu sehen sind. Es entsteht ein Array 15 an Teilstrahlen 14.

Rein schematisch sind ferner Fourierlinsen 33 dargestellt. Jeder Reihe des Arrays 15 ist eine eigene Fourierlinse 33 zugeordnet. Ferner ist eine Einkopplungseinheit 29 dargestellt, nach der die Teilstrahlen 14 des Arrays 15 die Treppenspiegeleinheit 16 durchlaufen. Danach folgt eine Relaisoptik 40, nach der die Teilstahlen 14 optische Pinzetten ausbilden.

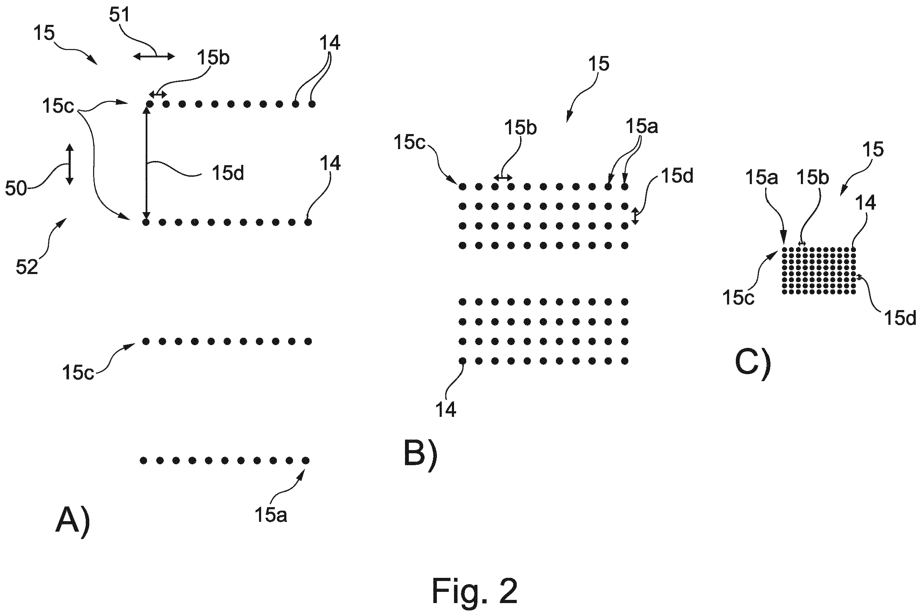

In Figur 2 ist der Array 15 an Teilstrahlen 14 in erste Richtung 50 und zweite Richtung 51 gezeigt. Die dritte Richtung 52, in die die Teilstrahlen propagieren, erstreckt sich in die Bildebene. Die Teilstrahlen 14 sind in dem Beispiel der Figur 2 in Spalten 15a mit einem Abstand 15b zwischen Teilstrahlen in einer Reihe und Reihen 15c mit einem Reihenabstand 15d angeordnet.

In Abschnitt 2A ist zu sehen, wie der Reihenabstand 15d wesentlich größer ist als der Abstand 15b von Teilstrahlen in einer Reihe. Dies ist insbesondere durch die Baugröße der akustooptischen Deflektoren 13b bedingt. Wie in Abschnitt 2A gezeigt, liegt der Array 15 nach den Fourierlinsen, vor allem in der Brennebene der Fourierlinsen vor, wenn keine Treppenspiegeleinheit eingesetzt wird.

In Abschnitt 2B ist der Array 15 nach Durchlaufen der Treppenspiegeleinheit 16 vor. Genauer liegt der Array so bei Verwendung der Treppenspiegeleinheit 16 in der Brennebene der Fourierlinsen vor. Der Reihenabstand 15d ist wesentlich reduziert. Er entspricht nun dem Abstand 15b benachbarter Teilstrahlen in einer Reihe.

In Abschnitt 2C der Figur 2 ist der Abstand 15d der Teilstrahlen in einer Reihe und der Reihenabstand 15d nach Durchlaufen der Relaisoptik 40 nochmals reduziert, und zwar vorzugsweise um einen Faktor 50 im Vergleich zu Abschnitt 2B.

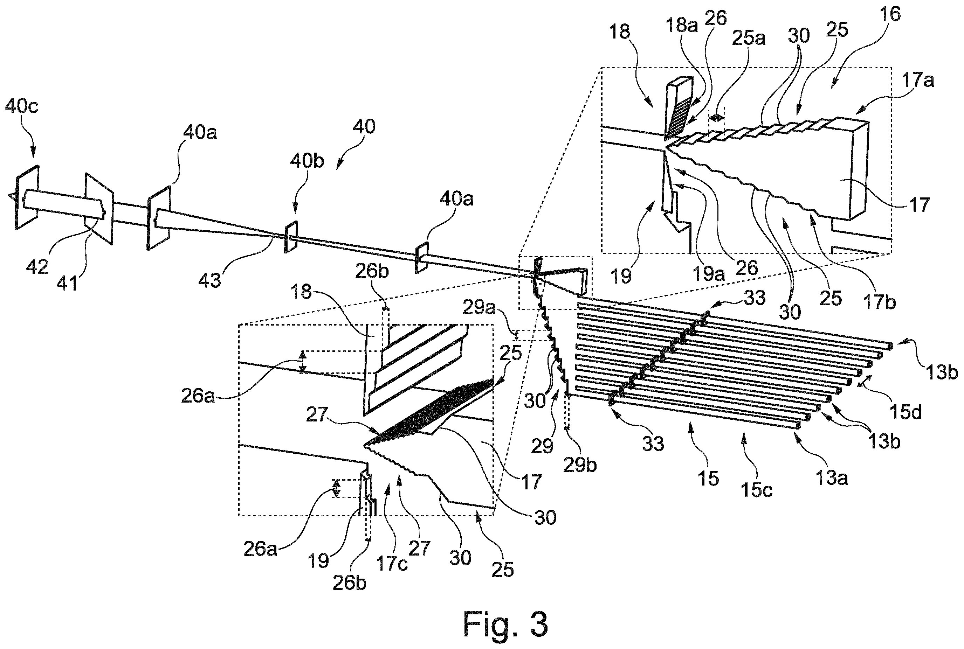

In Figur 3 ist eine detailliertere Ansicht der Vorrichtung 10 der Figur 1 zu sehen. Während die Strahlteilereinheit nicht zu sehen ist, sind die akustooptischen Deflektoren 13b und die Fourierlinsen 33 zu sehen. Jeder Reihe des Arrays 15 ist eine Fourierlinse 33 zugeordnet. An der Stelle der Fourierlinsen 33 verläuft die erste Richtung 50 des Arrays in Figur 3 horizontal, während die zweite Richtung 51 vertikal verläuft. Die in Figur 3 nach den akustooptischen Deflektoren 13 dargestellten Strahlen sind Spalten 15a des Arrays 15. So ist der Reihenabstand 15d zu sehen. Der Abstand 15b von Teilstrahlen in einer Reihe ist im Vergleich so viel kleiner, dass er in Figur 3 nicht zu erkennen ist.

In Figur 3 sind nur die zehn untersten Reihen 15c des Arrays 15 gezeigt, die auf einer Seite der Treppenspiegeleinheit 16 eingekoppelt werden. Weitere Reihen 15c des Arrays 15 werden auf der anderen Seite der Treppenspiegeleinheit 16, die im Folgenden noch detaillierter beschrieben wird, eingekoppelt.

Die Teilstrahlen 14 durchlaufen die Fourierlinsen 33 und treffen dann auf die Einkopplungseinheit 29, die aus mehreren Spiegeln 30 besteht. Die Einkopplungseinheit 29 ist durch einen festen Treppenabstand 29a und durch eine feste Treppenhöhe 29b charakterisiert. Die Spiegel 30 sind somit jeweils um eine Treppenhöhe 29b und einen Treppenabstand 29a versetzt.

Die Treppenspiegeleinheit 16 ist im größeren Detail im oberen rechten Bildausschnitt der Figur 3 dargestellt. Wie zu sehen ist, besteht die Treppenspiegeleinheit 16 aus drei Bauteilen, und zwar einem ersten Bauteil 17, einem zweiten Bauteil 18 und einem dritten Bauteil 19, die keilförmig ausgebildet sind Die Endbereiche, in denen diese spitz zulaufen, sind einander zugewandt. Das erste Bauteil 17 ist dabei spiegelsymmetrisch ausgebildet.

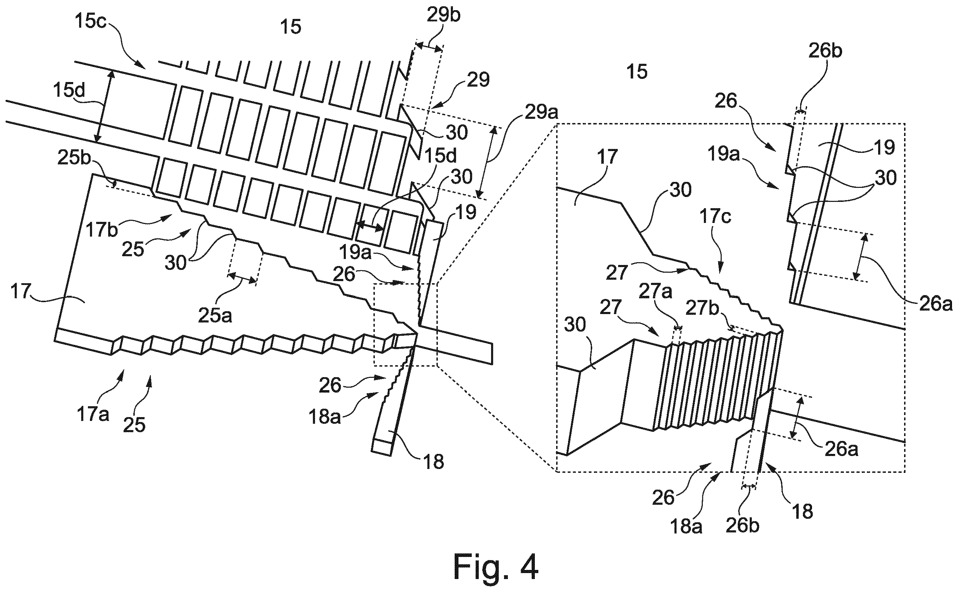

Das erste Bauteil 17 weist eine erste Seitenfläche 17a auf und eine zweite Seitenfläche 17b. Auf jeder der beiden vorgenannten Seitenflächen ist jeweils ein erster Treppenspiegel 25 angeordnet mit Spiegeln 30 und einem Treppenabstand 25a zwischen benachbarten Spiegeln 30 und einer Treppenhöhe 25b (siehe oberen Ausschnitt der Figur 3 und Figur 4).

Das zweite Bauteil 18 weist eine erste Seitenfläche 18a auf, die der ersten Seitenfläche 17a des ersten Bauteils 17 gegenübersteht. Ferner weist das dritte Bauteil 19 eine erste Seitenfläche 19a auf, die der zweiten Seitenfläche 17b des ersten Bauteils 17 gegenübersteht. Die erste Seitenfläche 18a des zweiten Bauteils 18 und die erste Seitenfläche 19a des dritten Bauteils 19 weisen jeweils einen zweiten Treppenspiegel 26 auf mit einem Treppenabstand 26a und einer Treppenhöhe 26b zwischen Spiegeln 30 (siehe auch unteren Ausschnitt der Figur 3 und Figur 4).

Eine weitere noch detailliertere Darstellung ist in der unteren Detaildarstellung der Figur 3 zu sehen. Deutlicher sind die Spiegel 30 der zweiten Treppenspiegel 26 auf dem zweiten Bauteil 18 und dem dritten Bauteil 19 zu sehen. Ferner ist zu erkennen, wie das erste Bauteil 17 einen ersten Endbereich 17c aufweist. In dem ersten Endbereich 17c des ersten Bauteils 17 ist auf beiden Seitenflächen des ersten Bauteils 17 jeweils ein dritter Treppenspiegel 27 angeordnet mit einem Treppenabstand 27a und einer Treppenhöhe 27b.

An die Treppenspiegeleinheit 16 schließt sich die Relaisoptik 40 an, die aus zwei Kollimatoren 40a besteht und einer dazwischen angeordneten fokussierenden Linsengruppe 40b. Ferner umfasst die Relaisoptik 40 ein Mikroskopobjektiv 40c. Ein Auskoppelspiegel 41 ist zwischen dem zweiten Kollimator 40a und dem Mikroskopobjektiv 40c angeordnet.. Der Auskoppelspiegel 41 liegt in einer Pupillenebene 42, die sich optimal zum Einkoppeln von Strahlung zur Anregung eingefangener Atome oder zum Auskoppeln von Strahlung eingefangener Atome eignet. Nach der Linsengruppe 40b kann eine zweite Zwischenbildebene 43 angeordnet sein.

Der Reihenabstand 15d der Teilstrahlen wurde zunächst mittels der Treppenspiegeleinheit 16 und der Einkopplungseinheit 29 reduziert. Eine weitere Reduktion sowohl des Reihenabstandes 15d als auch des Abstandes 15b von Teilstrahlen in einer Reihe findet dann über die Relaisoptik 40 unter anderem durch das Mikroskopobjektiv 40c, statt.

In Figur 4 ist eine vergrößerte Darstellung der Treppenspiegeleinheit 16 aus Figur 3 zu sehen. Deutlich ist das erste Bauteil 17 mit beidseitig angeordneten ersten Treppenspiegeln 25 auf den jeweiligen Seitenflächen 17a, 17b zu sehen. Ferner sind drei Spiegel 30 der Einkopplungseinheit 29 zu sehen. Deutlich ist deren Treppenabstand 29a und deren Treppenhöhe 29b zu erkennen.

Durch die versetzte Anordnung der Spiegel 30 der Einkopplungseinheit 29 stellen diese einen Treppenspiegel dar. Ferner sind das zweite Bauteil 18 und das dritte Bauteil 19 der Treppenspiegeleinheit 16 zu sehen, die auf den jeweiligen ersten Seitenflächen 18a, 19a einen zweiten Treppenspiegel 26 aufweisen. In der vergrößerten Darstellung auf der rechten Seite der Figur 4 ist insbesondere der erste Endbereich 17c des ersten Bauteils 17 deutlich zu sehen. Auf den Seitenflächen 17a und 17b sind jeweils ein dritter Treppenspiegel 27 mit dem Treppenabstand 27a und der Treppenhöhe 27b angeordnet.

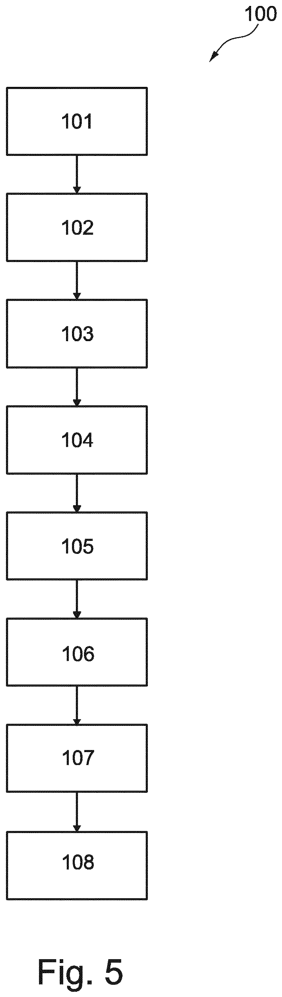

Figur 5 zeigt ein Verfahrensschema eines Verfahrens 100 zur Erzeugung von optischen Pinzetten, das ein Erzeugen 103 eines Arrays 15 an Teilstrahlen 14 und eine Reduktion 106 eines Reihenabstandes 15d des Arrays, in anderen Worten des Abstands der Teilstrahlen des Arrays 15 in mindestens einer ersten Richtung 50, umfasst.

Zunächst kann das Verfahren 100 das Aufteilen 101 des Laserstrahls 12 einer Laserstrahlquelle 11 in Teilstrahlen 14 in erster Richtung und im Anschluss das Aufteilen 102 der so erzeugten Teilstrahlen in eine zweite Richtung 51 und somit in Reihen 15c umfassen. Auf diese Weise wird der Array 15 erzeugt 103.

Im Anschluss können die Teilstrahlen 14 des Arrays 15 in die Treppenspiegeleinheit 16 eingekoppelt werden 104 und die Treppenspiegeleinheit 16 durchlaufen 105. So wird der Reihenabstand 15d der Teilstrahlen 14 reduziert 106. Eine weitere Reduktion 108 des Abstandes der Teilstrahlen 14 des Arrays 15 in beide Richtungen erfolgt insbesondere durch Durchlaufen 107 einer Relaisoptik 40.

### Bezugszeichen

- 10: Vorrichtung
- 11: Laserstrahlquelle
- 12: Laserstrahl
- 13: akustooptischer Deflektor
- 13a: Strahlteilereinheit
- 13b: akustooptischer Deflektor
- 14: Teilstrahlen
- 15: Array
- 15a: Spalte
- 15b: Abstand innerhalb einer Reihe
- 15c: Reihe
- 15d: Reihenabstand

- 16: Treppenspiegeleinheit
- 17: erstes Bauteil
- 17a: erste Seitenfläche des ersten Bauteils
- 17b: zweite Seitenfläche des ersten Bauteils
- 17c: erster Endbereich des ersten Bauteils
- 18: zweites Bauteil
- 18a: erste Seitenfläche des zweiten Bauteils
- 19: drittes Bauteil
- 19a: erste Seitenfläche des dritten Bauteils

- 25: erster Treppenspiegel
- 25a: Treppenabstand des ersten Treppenspiegels
- 25b: Treppenhöhe des ersten Treppenspiegels
- 26: zweiter Treppenspiegel
- 26a: Treppenabstand des zweiten Treppenspiegels
- 26b: Treppenhöhe des zweiten Treppenspiegels
- 27: dritter Treppenspiegel
- 27a: Treppenabstand des dritten Treppenspiegels
- 27b: Treppenhöhe des dritten Treppenspiegels

- 29: Einkopplungseinheit
- 29a: Treppenabstand der Einkopplungseinheit
- 29b: Treppenhöhe der Einkopplungseinheit

- 30: Spiegel

- 33: Fourierlinsen

- 40: Relaisoptik
- 40a: Kollimator
- 40b: fokussierende Linsengruppe
- 40c: Mikroskopobjektiv
- 41: Auskoppelspiegel
- 42: Pupillenebene
- 43: zweite Zwischenbildebene

- 50: erste Richtung
- 51: zweite Richtung
- 52: dritte Richtung

- 100: Verfahren zur Erzeugung von optischen Pinzetten
- 101: Aufteilen des Laserstrahls in Teilstrahlen in eine Spalte
- 102: Aufteilen der Teilstrahlen in Reihen
- 103: Erzeugen eines Arrays an Teilstrahlen
- 104: Einkoppeln der Teilstrahlen des Arrays in die Treppenspiegeleinheit
- 105: Durchlaufen der Treppenspiegeleinheit
- 106: Reduktion eines Reihenabstandes der Teilstrahlen des Arrays
- 107: Durchlaufen der Relaisoptik
- 108: Reduktion des Reihenabstandes und Abstandes der Teilstrahlen in einer Reihe

## Patentansprüche

1. Vorrichtung (10) zur Erzeugung von optischen Pinzetten, umfassend
eine Laserstrahlquelle (11) zur Erzeugung eines Laserstrahls (12), und
mindestens einen akustooptischen Deflektor (13) zum Erzeugen eines Arrays (15) an Teilstrahlen (14) des Laserstrahls (12),
wobei der Array (15) Reihen (15c) umfasst,
wobei
die Vorrichtung (10) eine Treppenspiegeleinheit (16) umfassend mindestens einen ersten Treppenspiegel (25) zur Reduktion eines Reihenabstandes (15d) der Teilstrahlen (14) des Arrays (15) aufweist,
wobei der erste Treppenspiegel (25) Spiegel (30), einen Treppenabstand (25a) zwischen benachbarten Spiegeln (30) und eine Treppenhöhe (25b) umfasst,
wobei
die Treppenspiegeleinheit (10) einen zweiten Treppenspiegel (26) umfasst,
wobei der zweite Treppenspiegel (26) Spiegel (30), einen Treppenabstand (26a) zwischen benachbarten Spiegeln (30) und eine Treppenhöhe (26b) umfasst,
**dadurch gekennzeichnet, dass**
der Treppenabstand (26a) des zweiten Treppenspiegels (26) der Treppenhöhe (25b) des ersten Treppenspiegels (25) entspricht,
wobei sämtliche Spiegel des ersten Treppenspiegels eine parallele Ausrichtung aufweisen und wobei sämtliche Spiegel des zweiten Treppenspiegels eine parallele Ausrichtung aufweisen.

2. Vorrichtung (10) nach Anspruch 1,
**dadurch gekennzeichnet, dass**
die Treppenspiegeleinheit (16) mehrstufig, vorzugsweise zwei- oder dreistufig, ausgebildet ist.

3. Vorrichtung (10) nach Anspruch 1 oder 2,
**dadurch gekennzeichnet, dass**
die Treppenspiegeleinheit (16) einen dritten Treppenspiegel (27) umfasst,
wobei der dritte Treppenspiegel (27) Spiegel (30), einen Treppenabstand (27a) zwischen benachbarten Spiegeln (30) und eine Treppenhöhe (27b) umfasst,
wobei der Treppenabstand (27a) des dritten Treppenspiegels der Treppenhöhe (26b) des zweiten Treppenspiegels (26) entspricht.

4. Vorrichtung (10) nach einem der vorangehenden Ansprüche,
**dadurch gekennzeichnet, dass**
die Vorrichtung (10) eine Einkopplungseinheit (29) zur Einkopplung der Teilstrahlen in die Treppenspiegeleinheit (16) umfasst,
wobei die Einkopplungseinheit (29) Spiegel (30), einen Treppenabstand (29a) zwischen benachbarten Spiegeln (30) und eine Treppenhöhe (29b) umfasst,
wobei die Treppenhöhe (29b) der Einkopplungseinheit (29) dem Treppenabstand (25a) des ersten Treppenspiegels (25) entspricht.

5. Vorrichtung (10) nach einem der vorangehenden Ansprüche,
**dadurch gekennzeichnet, dass**
die Treppenhöhe (25b) des ersten Treppenspiegels (25) kleiner ist als der Treppenabstand (25a) des ersten Treppenspiegels (25) und/oder
die Treppenhöhe (26b) des zweiten Treppenspiegels (26) kleiner ist als der Treppenabstand (26a) des zweiten Treppenspiegels (26) und/oder
die Treppenhöhe (27a) des dritten Treppenspiegels (27) kleiner ist als der Treppenabstand (27b) des dritten Treppenspiegels (27), und/oder
die Treppenhöhe (29b) der Einkopplungseinheit (29) kleiner ist als der Treppenabstand (29a) der Einkopplungseinheit (29).

6. Vorrichtung (10) nach einem der vorangehenden Ansprüche,
**dadurch gekennzeichnet, dass**
der Treppenabstand (25a) des ersten Treppenspiegels (25) zwischen 4 mm und 12 mm, vorzugsweise zwischen 6 mm und 10 mm, am meisten bevorzugt zwischen 7 mm und 9 mm, und/oder
die Treppenhöhe (25b) des ersten Treppenspiegels (25) zwischen 0,5 mm und 3,5 mm, bevorzugterweise zwischen 1 mm und 3 mm, beträgt.

7. Vorrichtung (10) nach einem der vorangehenden Ansprüche,
**dadurch gekennzeichnet, dass**
der Treppenabstand (26a) des zweiten Treppenspiegels (26) zwischen 0,5 mm und 3,5 mm, vorzugsweise zwischen 1 mm und 3 mm, und/oder
die Treppenhöhe (26b) des zweiten Treppenspiegels (26) zwischen 0,25 mm und 0,75 mm, bevorzugterweise zwischen 0,4 mm und 0,6 mm, beträgt.

8. Vorrichtung (10) nach einem der Ansprüche 3 bis 7,
**dadurch gekennzeichnet, dass**
der Treppenabstand (27a) des dritten Treppenspiegels (27) zwischen 0,25 mm und 0,75 mm, vorzugsweise zwischen 0,4 mm und 0,6 mm,
und/oder die Treppenhöhe (27b) des dritten Treppenspiegels (27) zwischen 0,10 mm und 0,30 mm, bevorzugterweise zwischen 0,150 mm und 0,20 mm, beträgt.

9. Vorrichtung (10) nach einem der vorangehenden Ansprüche,
**dadurch gekennzeichnet, dass**
die Vorrichtung (10) eine Strahlteilereinheit (13a) zur Aufteilung des Laserstrahls (12) in Teilstrahlen (14) in eine erste Richtung (50) umfasst,
wobei die Vorrichtung (10) pro Teilstrahl (14) einen akustooptischen Deflektor (13b) zum Aufteilen der Teilstrahlen (14) in Reihen (15c) und somit zum Erzeugen des Arrays (15) an Teilstrahlen (14) umfasst.

10. Vorrichtung (10) nach einem der vorangehenden Ansprüche,
**dadurch gekennzeichnet, dass**
die Vorrichtung (10) eine Relaisoptik (40) umfassend ein Mikroskopobjektiv (40c) zur Reduktion des Reihenabstandes (15d) und des Abstandes von Teilstrahlen (14) innerhalb einer Reihe umfasst,
wobei die Teilstrahlen (14) nach der Relaisoptik (40) optische Pinzetten zum Einfangen von Atomen ausbilden.

11. Vorrichtung (10) nach einem der Ansprüche,
**dadurch gekennzeichnet, dass**
die Vorrichtung (10) eine Einheit zum Einkoppeln von Strahlung zur Anregung von mittels der optischen Pinzetten eingefangenen Atomen und/oder zur Auskopplung von von mittels der optischen Pinzetten eingefangenen Atomen stammender Strahlung aufweist,
wobei die Einheit zur Einkopplung und/oder Auskopplung in einer Pupillenebene (42) der Relaisoptik (40) ausgebildet ist.

12. Verfahren (100) zur Erzeugung von optischen Pinzetten,
wobei das Verfahren (100) ein Erzeugen (103) eines Arrays (15) an Teilstrahlen (14) mittels mindestens eines akustooptischen Deflektors (13) umfasst,
wobei der Array (15) Reihen (15c) umfasst,
wobei
das Verfahren (100) eine Reduktion (1069 eines Reihenabstandes (15d) der Teilstrahlen (14) des Arrays (15) mittels einer Treppenspiegeleinheit (16) aufweisend mindestens einen ersten Treppenspiegel (25) umfasst,
wobei der erste Treppenspiegel (25) Spiegel (30), einen Treppenabstand (25a) zwischen benachbarten Spiegeln (30) und eine Treppenhöhe (25b) umfasst,
wobei die Treppenspiegeleinheit (10) einen zweiten Treppenspiegel (26) umfasst,
wobei der zweite Treppenspiegel (26) Spiegel (30), einen Treppenabstand (26a) zwischen benachbarten Spiegeln (30) und eine Treppenhöhe (26b) umfasst,
**dadurch gekennzeichnet, dass**
der Treppenabstand (26a) des zweiten Treppenspiegels (26) der Treppenhöhe (25b) des ersten Treppenspiegels (25) entspricht, und
wobei sämtliche Spiegel des ersten Treppenspiegels eine parallele Ausrichtung aufweisen und wobei sämtliche Spiegel des zweiten Treppenspiegels eine parallele Ausrichtung aufweisen.

## Claims

1. Device (10) for the production of optical tweezers,
comprising
a laser beam source (11) for generating a laser beam (12), and
at least one acousto-optical deflector (13) for generating an array (15) of partial beams (14) of the laser beam (12),
wherein the array (15) comprises rows (15c),
wherein
the device (10) has a staircase mirror unit (16) comprising at least one first staircase mirror (25) for reducing a row spacing (15d) of the partial beams (14) of the array (15),
wherein the first staircase mirror (25) comprises mirrors (30), a staircase spacing (25a) between adjacent mirrors (30) and a staircase height (25b),
wherein the staircase mirror unit (10) comprises a second staircase mirror (26),
wherein the second staircase mirror (26) comprises mirrors (30), a staircase spacing (26a) between adjacent mirrors (30) and a staircase height (26b),
**characterized in that** the staircase spacing (26a) of the second staircase mirror (26) corresponds to the staircase height (25b) of the first staircase mirror (25),
wherein all mirrors of the first staircase mirror have a parallel alignment and wherein all mirrors of the second staircase mirror have a parallel alignment.

2. Device (10) according to claim 1,
**characterized in that**
the staircase mirror unit (16) is formed with several steps, preferably with two or three steps.

3. Device (10) according to claim 1 or 2,
**characterized in that**
the staircase mirror unit (16) comprises a third staircase mirror (27),
wherein the third staircase mirror (27) comprises mirrors (30), a staircase spacing (27a) between adjacent mirrors (30) and a staircase height (27b),
wherein the staircase spacing (27a) of the third staircase mirror corresponds to the staircase height (26b) of the second staircase mirror (26).

4. Device (10) according to one of the preceding claims,
**characterized in that**
the device (10) comprises a coupling unit (29) for coupling the partial beams into the staircase mirror unit (16),
wherein the coupling unit (29) comprises mirrors (30), a staircase spacing (29a) between adjacent mirrors (30) and a staircase height (29b),
wherein the staircase height (29b) of the coupling unit (29) corresponds to the staircase spacing (25a) of the first staircase mirror (25).

5. Device (10) according to one of the preceding claims,
**characterized in that**
the staircase height (25b) of the first staircase mirror (25) is smaller than the staircase spacing (25a) of the first staircase mirror (25) and/or
the staircase height (26b) of the second staircase mirror (26) is smaller than the staircase spacing (26a) of the second staircase mirror (26) and/or
the staircase height (27a) of the third staircase mirror (27) is smaller than the staircase spacing (27b) of the third staircase mirror (27), and/or
the staircase height (29b) of the coupling unit (29) is smaller than the staircase spacing (29a) of the coupling unit (29).

6. Device (10) according to one of the preceding claims,
**characterized in that**
the staircase spacing (25a) of the first staircase mirror (25) is between 4 mm and 12 mm, preferably between 6 mm and 10 mm, most preferably between 7 mm and 9 mm, and/or
the staircase height (25b) of the first staircase mirror (25) is between 0.5 mm and 3.5 mm, preferably between 1 mm and 3 mm.

7. Device (10) according to one of the preceding claims,
**characterized in that**
the staircase spacing (26a) of the second staircase mirror (26) is between 0.5 mm and 3.5 mm, preferably between 1 mm and 3 mm, and/or
the staircase height (26b) of the second staircase mirror (26) is between 0.25 mm and 0.75 mm, preferably between 0.4 mm and 0.6 mm.

8. Device (10) according to one of claims 3 to 7,
**characterized in that**
the staircase spacing (27a) of the third staircase mirror (27) is between 0.25 mm and 0.75 mm, preferably between 0.4 mm and 0.6 mm,
and/or the staircase height (27b) of the third staircase mirror (27) is between 0.10 mm and 0.30 mm, preferably between 0.150 mm and 0.20 mm.

9. Device (10) according to one of the preceding claims,
**characterized in that**
the device (10) comprises a beam splitter unit (13a) for splitting the laser beam (12) into partial beams (14) in a first direction (50),
wherein the device (10) comprises one acousto-optic deflector (13b) per partial beam (14) for dividing the partial beams (14) into rows (15c) and thus for generating the array (15) of partial beams (14).

10. Device (10) according to one of the preceding claims,
**characterized in that**
the device (10) comprises a relay optics (40) comprising a microscope objective (40c) for reducing the row spacing (15d) and the spacing of partial beams (14) within a row,
wherein the partial beams (14) after the relay optics (40) form optical tweezers for capturing atoms.

11. Device (10) according to one of the claims,
**characterized in that**
the device (10) has a unit for coupling radiation for exciting atoms captured by means of the optical tweezers and/or for decoupling radiation originating from atoms captured by means of the optical tweezers,
wherein the unit is configured for coupling and/or decoupling in a pupil plane (42) of the relay optics (40).

12. Method (100) for producing optical tweezers,
wherein the method (100) comprises generating (103) an array (15) of partial beams (14) by means of at least one acousto-optic deflector (13),
wherein the array (15) comprises rows (15c),
wherein the method (100) comprises a reduction (1069) of a row spacing (15d) of the partial beams (14) of the array (15) by means of a staircase mirror unit (16) having at least a first staircase mirror (25),
wherein the first staircase mirror (25) comprises mirrors (30), a staircase spacing (25a) between adjacent mirrors (30) and a staircase height (25b),
wherein the staircase mirror unit (10) comprises a second staircase mirror (26),
wherein the second staircase mirror (26) comprises mirrors (30), a staircase spacing (26a) between adjacent mirrors (30) and a staircase height (26b),
**characterized in that**
the staircase distance (26a) of the second staircase mirror (26) corresponds to the staircase height (25b) of the first staircase mirror (25), and
wherein all mirrors of the first staircase mirror have a parallel alignment and
wherein all mirrors of the second staircase mirror have a parallel alignment.

## Revendications

1. Dispositif (10) de production de pincettes optiques,
comprenant
une source de faisceau laser (11) pour générer un faisceau laser (12), et au moins un déflecteur acousto-optique (13) pour générer un réseau (15) de faisceaux partiels (14) du faisceau laser (12),
dans lequel le réseau (15) comprend des rangées (15c),
où
le dispositif (10) présente une unité de miroirs en escalier (16) comprenant au moins un premier miroir en escalier (25) pour réduire une distance entre les rangées (15d) des faisceaux partiels (14) du réseau (15),
dans lequel le premier miroir en escalier (25) comprend des miroirs (30), une distance d'escalier (25a) entre des miroirs adjacents (30) et une hauteur d'escalier (25b),
où
l'unité de miroirs en escalier (16) comprend un deuxième miroir en escalier (26),
dans lequel le deuxième miroir en escalier (26) comprend des miroirs (30), une distance d'escalier (26a) entre des miroirs adjacents (30) et une hauteur d'escalier (26b),
**caractérisé en ce que** la distance d'escalier (26a) du deuxième miroir en escalier (26) correspond à la hauteur d'escalier (25b) du premier miroir en escalier (25),
dans lequel tous les miroirs du premier miroir en escalier ont une orientation parallèle et dans lequel tous les miroirs du deuxième miroir en escalier ont une orientation parallèle.

2. Dispositif (10) selon la revendication 1,
**caractérisé en ce que**
l'unité de miroirs en escalier (16) est réalisée à plusieurs niveaux, de préférence à deux ou trois niveaux.

3. Dispositif (10) selon la revendication 1 ou 2,
**caractérisé en ce que**
l'unité de miroirs en escalier (16) comprend un troisième miroir en escalier (27),
dans lequel le troisième miroir en escalier (27) comprend des miroirs (30), une distance en escalier (27a) entre des miroirs adjacents (30) et une hauteur d'escalier (27b),
la distance d'escalier (27a) du troisième miroir en escalier correspondant à la hauteur d'escalier (26b) du deuxième miroir en escalier (26).

4. Dispositif (10) selon l'une des revendications précédentes,
**caractérisé en ce que**
le dispositif (10) comprend une unité de couplage (29) pour coupler les faisceaux partiels dans l'unité de miroirs en escalier (16),
dans lequel l'unité de couplage (29) comprend des miroirs (30), une distance en escalier (29a) entre des miroirs adjacents (30) et une hauteur d'escalier (29b),
dans lequel la hauteur d'escalier (29b) de l'unité de couplage (29) correspond à la distance d'escalier (25a) du premier miroir en escalier (25).

5. Dispositif (10) selon l'une des revendications précédentes,
**caractérisé en ce que**
la hauteur d'escalier (25b) du premier miroir en escalier (25) est inférieure à la distance d'escalier (25a) du premier miroir en escalier (25) et/ou
la hauteur d'escalier (26b) du deuxième miroir en escalier (26) est inférieure à la distance d'escalier (26a) du deuxième miroir en escalier (26) et/ou
la hauteur d'escalier (27a) du troisième miroir en escalier (27) est inférieure à la distance d'escalier (27b) du troisième miroir en escalier (27), et/ou
la hauteur d'escalier (29b) de l'unité de couplage (29) est inférieure à la distance d'escalier (29a) de l'unité de couplage (29).

6. Dispositif (10) selon l'une des revendications précédentes,
**caractérisé en ce que**
la distance d'escalier (25a) du premier miroir en escalier (25) est comprise entre 4 mm et 12 mm, de préférence entre 6 mm et 10 mm, le plus préférablement entre 7 mm et 9 mm, et/ou
la hauteur d'escalier (25b) du premier miroir en escalier (25) est comprise entre 0,5 mm et 3,5 mm, de préférence entre 1 mm et 3 mm.

7. Dispositif (10) selon l'une quelconque des revendications précédentes,
**caractérisé en ce que**
la distance d'escalier (26a) du deuxième miroir en escalier (26) est comprise entre 0,5 mm et 3,5 mm, de préférence entre 1 mm et 3 mm, et/ou
la hauteur d'escalier (26b) du deuxième miroir en escalier (26) est comprise entre 0,25 mm et 0,75 mm, de préférence entre 0,4 mm et 0,6 mm.

8. Dispositif (10) selon l'une quelconque des revendications 3 à 7,
**caractérisé en ce que**
la distance d'escalier (27a) du troisième miroir en escalier (27) est comprise entre 0,25 mm et 0,75 mm, de préférence entre 0,4 mm et 0,6 mm,
et/ou la hauteur d'escalier (27b) du troisième miroir en escalier (27) est comprise entre 0,10 mm et 0,30 mm, de préférence entre 0,150 mm et 0,20 mm.

9. Dispositif (10) selon l'une quelconque des revendications précédentes,
**caractérisé en ce que**
le dispositif (10) comprend une unité de division de faisceau (13a) pour diviser le faisceau laser (12) en faisceaux partiels (14) dans une première direction (50),
le dispositif (10) comprenant, par faisceau partiel (14), un déflecteur acousto-optique (13b) destiné à diviser les faisceaux partiels (14) en rangées (15c) et à produire ainsi le réseau (15) de faisceaux partiels (14).

10. Dispositif (10) selon l'une des revendications précédentes,
**caractérisé en ce que**
le dispositif (10) comprend une optique de relais (40) comprenant un objectif de microscope (40c) pour réduire l'espacement des rangées (15d) et l'espacement des faisceaux partiels (14) à l'intérieur d'une rangée,
dans lequel les faisceaux partiels (14) forment, après l'optique de relais (40), des pinces optiques pour capturer des atomes.

11. Dispositif (10) selon l'une quelconque des revendications,
**caractérisé en ce que**
le dispositif (10) comprend une unité de couplage de rayonnement pour exciter des atomes capturés au moyen des pinces optiques et/ou pour découpler le rayonnement provenant d'atomes capturés au moyen des pinces optiques,
l'unité étant conçue pour un couplage et/ou un découplage dans un plan de pupille (42) de l'optique de relais (40).

12. Procédé (100) de production de pincettes optiques,
dans lequel le procédé (100) comprend la génération (103) d'un réseau (15) de sous-faisceaux (14) au moyen d'au moins un déflecteur acousto-optique (13),
dans lequel le réseau (15) comprend des rangées (15c),
dans lequel le procédé (100) comprend une réduction (1069) d'un espacement de rangées (15d) des sous-faisceaux (14) du réseau (15) au moyen d'une unité de miroirs en escalier (16) comprenant au moins un premier miroir en escalier (25),
dans lequel le premier miroir en escalier (25) comprend des miroirs (30), une distance d'escalier (25a) entre des miroirs adjacents (30) et une hauteur d'escalier (25b),
dans lequel l'unité de miroir en escalier (10) comprend un deuxième miroir en escalier (26),
dans lequel le deuxième miroir en escalier (26) comprend des miroirs (30), une distance d'escalier (26a) entre des miroirs adjacents (30) et une hauteur d'escalier (26b),
**caractérisé en ce que**
la distance d'escalier (26a) du deuxième miroir en escalier (26) correspond à la hauteur d'escalier (25b) du premier miroir en escalier (25), et
dans lequel tous les miroirs du premier miroir en escalier ont une orientation parallèle et dans lequel tous les miroirs du deuxième miroir en escalier ont une orientation parallèle.
